# EUROPEAN PATENT APPLICATION

(11) **EP 4 676 067 A1**
(43) Date of publication of application: **07.01.2026**
(21) Application number: 24763188.0
(22) Date of filing: 28.02.2024
(51) Int. Cl.: H04N 21/4788

(54) **VIRTUAL GIFT GENERATION METHOD AND APPARATUS, DEVICE, AND MEDIUM**

(30) Priority: 28.02.2023 CN 202310214449
(71) Applicant: Beijing Zitiao Network Technology Co., Ltd., Beijing 100190 (CN)
(72) Inventor: WANG, Ke, Beijing 100028 (CN); CHEN, Fuqiang, Beijing 100028 (CN); MA, Kang, Beijing 100028 (CN); DENG, Pingwei, Beijing 100028 (CN); NIU, Wenchao, Beijing 100028 (CN)
(74) Representative: Marks & Clerk LLP
(86) International application number: PCT/CN2024/078964
(87) International publication number: WO 2024/179508

(57) **Abstract**

The present application discloses a virtual gift generating method and apparatus, a device, and a medium. The method includes: in response to a triggering operation by a user in a live streaming room; obtaining information to be processed, wherein the information to be processed is information used for generating a virtual gift; after the information to be processed is obtained, determining a virtual gift template corresponding to the information to be processed, wherein different virtual gift templates correspond to different animation effects; and generating a virtual gift based on the virtual gift template and the information to be processed, wherein the virtual gift presents an animation effect corresponding to the virtual gift template.

## Description

This application claims priority to Chinese Patent Application No. 202310214449.7, entitled "VIRTUAL GIFT GENERATING METHOD AND APPARATUS, DEVICE, AND MEDIUM", filed with the China National Intellectual Property Administration on February 28, 2023, the disclosure of which is incorporated by reference in its entirety.

### FIELD

The present application relates to the technical field of computers, and in particular, to a virtual gift generating method and apparatus, a device, and a medium.

### BACKGROUND

With the continuous development of network live streaming technology, more and more users interact with live streamers through live streaming rooms. Common ways of interaction include giving virtual gifts, performing typing in a public screen area, and the like. At present, when a user sends a live streamer with a virtual gift in a live streaming room, the user can only select fixed virtual gifts provided by a live streaming platform, which difficultly meets user needs and affects user experience.

### SUMMARY

In view of this, an embodiment of the present application provides a virtual gift generating method and apparatus, a device, and a medium.

To achieve the above objectives, a technical solution provided by the present application is as follows:

In a first aspect of the present application, a virtual gift generating method is provided, including:
in response to a triggering operation by a user, obtaining information to be processed, wherein the information to be processed is information used for generating a virtual gift;
determining a virtual gift template corresponding to the information to be processed, wherein the virtual gift template includes at least one of foreground information, background information, and a transformation model, the foreground information is used for providing a foreground image for a generated virtual gift, the background information is used for providing a background image for the generated virtual gift, the transformation model is used for adding a dynamic transformation effect to the information to be processed; and
generating a virtual gift based on the virtual gift template and the information to be processed.

In a second aspect of the present application, a virtual gift generating apparatus is provided, including:
an obtaining unit, configured to: in response to a triggering operation by a user, obtain information to be processed, wherein the information to be processed is information used for generating a virtual gift;
a determining unit, configured to determine a virtual gift template corresponding to the information to be processed, wherein the virtual gift template includes at least one of foreground information, background information, and a transformation model, the foreground information is used for providing a foreground image for a generated virtual gift, the background information is used for providing a background image for the generated virtual image, the transformation model is used for adding a dynamic transformation effect to the information to be processed; and
a generating unit, configured to generate a virtual gift based on the virtual gift template and the information to be processed.

In a third aspect of the present application, an electronic device is provided, including: a processor and a memory,

The memory is configured to store instructions or computer programs; and
the processor is configured to execute the instructions or the computer programs in the memory to cause the electronic device to perform the method described in the first aspect.

In a fourth aspect of the present application, a computer-readable storage medium is provided, having instructions stored therein, wherein the instructions, when executed on a device, cause the device to perform the method described in the first aspect.

In a fifth aspect of the present application, a computer program product is provided, including computer programs/instructions, and the computer programs/instructions, when executed by a processor, implement the above method described in the first aspect.

### BRIEF DESCRIPTION OF THE DRAWINGS

To describe the technical solutions in the embodiments of the present application or in the related art more clearly, the following briefly introduces the accompanying drawings for describing the embodiments or the related art. Apparently, the accompanying drawings in the following description show merely some embodiments recorded in the present application, and those with ordinary skill in the art may still derive other drawings from the accompanying drawings without creative efforts.
FIG. 1 is a flowchart of a virtual gift generating method according to an embodiment of the present application;
FIG. 2 is a schematic diagram of uploading a photo according to an embodiment of the present disclosure;
FIG. 3a is a schematic diagram of a background video in a virtual gift template according to an embodiment of the present application;
FIG. 3b is a schematic diagram of a background video in another virtual gift template according to an embodiment of the present application;
FIG. 3c is a schematic diagram of displaying of a text according to an embodiment of the present application;
FIG. 3d is a schematic diagram of displaying of another text according to an embodiment of the present application;
FIG. 4a is a schematic diagram of a virtual gift according to an embodiment of the present application;
FIG. 4b is a schematic diagram of another virtual gift according to an embodiment of the present application;
FIG. 5 is a structural diagram of a virtual gift generating apparatus according to an embodiment of the present application; and
FIG. 6 is a schematic structural diagram of an electronic device according to an embodiment of present application.

### DETAILED DESCRIPTION OF EMBODIMENTS

In order to make a person skilled in the art to better understand the solutions of the present application, the technical solutions in the embodiments of the present application are clearly and completely described below with reference to the accompanying drawings in the embodiments of the present application. Apparently, the described embodiments are merely some rather than all of the embodiments of the present application. All other embodiments obtained by those with ordinary skill in the art based on the embodiments of the present application without making creative efforts shall fall within the protection scope of the present application.

In a live streaming process, to enhance the interactivity between a live streamer and a viewer, a virtual gift giving function may be usually set on a viewer client. The viewer can select, through a gift panel in the client, a virtual gift that the viewer intends to send, and send the live streamer with the selected virtual gift through a send function. Usually, several selectable virtual gifts displayed on the virtual gift panel are set in advance by a live streaming platform, and virtual gifts that can be selected by viewers in different live streaming rooms or by viewers in the same live streaming room are the same, which cannot meet needs of different live streaming rooms or different viewers.

Based on this, the present application provides a virtual gift generating method. For a user in a live streaming room, information to be processed can be obtained for a viewer or a live streamer in response to a triggering operation by the user, and a virtual gift template corresponding to the information to be processed is determined. The virtual gift template includes at least one of foreground information, background information, and a transformation model; the foreground information is used for providing a foreground image for a generated virtual gift, the background information is used for providing a background image for the generated virtual gift, and the transformation model is used for adding a dynamic transformation effect to the information to be processed. Virtual gifts with different animation effects are generated based on the obtained information to be processed and the virtual gift template, so that the user interacts with the live streamer by using the virtual gifts, to meet a need of the user.

For ease of understanding the technical solutions of the embodiments of the present application, the following will make an explanation in conjunction with the accompanying drawings.

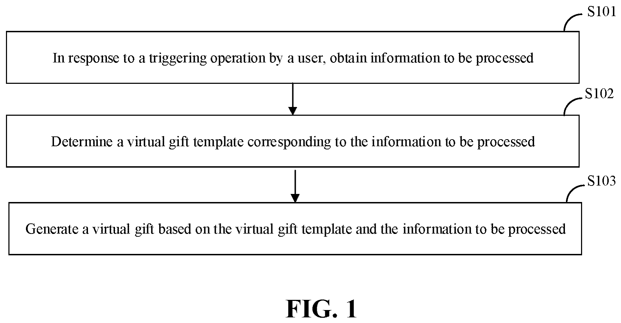

Referring to FIG. 1, it is a flowchart of a virtual gift generating method according to an embodiment of the present application. As shown in FIG. 1, the method may be performed by a live streaming client or a server. The live streaming client may be a live streaming client corresponding to a viewer side, or a live streaming client corresponding to a live streamer side, and may be installed in an electronic device. The electronic device may include a device with a communication function, such as a mobile phone, a tablet computer, a notebook computer, a desk computer, a vehicle-mounted terminal, a wearable electronic device, an all-in-one machine, and an intelligent home device, or may be a device simulated by a virtual machine or a simulator. As shown in FIG. 1, the method may include the following steps:
S101: In response to a triggering operation by a user, information to be processed is obtained.

In this embodiment, the user can upload information used for generating a virtual gift through a live streaming client, i.e., the information to be processed, wherein the information to be processed may be an image to be processed or text to be processed. That is, a virtual gift may be generated using the image to be processed, or a virtual gift may be generated using the text to be processed.

The above user may be a viewer or a live streamer in a live streaming room. When the user is the viewer in the live streaming room, the user uploads the information to be processed through the live streaming client on a viewer side. When the user is the live streamer of the live streaming room, the user uploads the information to be processed through a live streaming client on a live streamer side. It should be noted that generating the virtual gift based on the information to be processed can be performed by the live streaming client, or the live streaming client uploads the information to be processed to a server after obtaining the information to be processed, so that the server generates the virtual gift using the information to be processed.

In some implementations, the information to be processed may be obtained through the following:
In one mode, in response to a triggering operation by the user on a first control on a gift panel of the live streaming room, a first page is displayed; and in response to an upload operation triggered by the user on the first page, uploaded information to be processed is obtained. That is, an upload entry may be set on the gift panel of the live streaming room. The user uploads, through the upload entry, the information to be processed required to generate the virtual gift.

In another mode, in response to a triggering operation by the user on a second control on a personal homepage, a second page is displayed; and in response to an upload operation triggered by the user on the second page, uploaded information to be processed is obtained. That is, an upload entry can be set on the personal homepage of the live streaming client corresponding to the user, and the user uploads, through the upload entry, the information to be processed required to generate the virtual gift.

When the information to be processed uploaded by the user is the image to be processed, after the user enters the first page, an "upload photo" control can be displayed on the first page. By using the "upload photo" control, a photo to be uploaded can be selected from a local album, or a photo taken in real time by a local camera can be used.

Specifically, when the information to be processed uploaded by the user is the text to be processed, after the user enters the first page, an "upload photo" control can be displayed on the first page. By using the "upload photo" control, a photo to be uploaded, which includes text, can be selected from a local album, or a photo that is taken in real time by a local camera and includes text to be processed can be used. Or, after the user enters the first page, an input box is displayed, and the user can type information of the text to be processed into the input box.

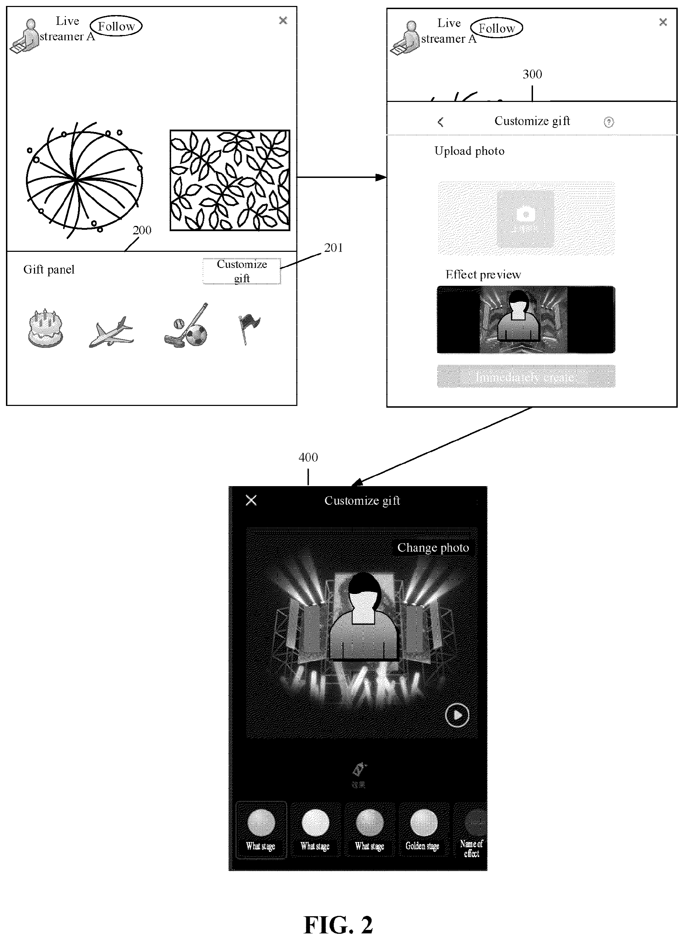

For ease of understanding, referring to a diagram of an application scene shown in FIG. 2. This scene is explained by taking the following as an example: A gift panel is configured with an upload entry and an image to be processed is uploaded. When a user opens the gift panel, a first control 201 may be displayed on the gift panel. In response to a triggering operation by the user on the first control 201, a first page 300 is displayed. An "upload photo" control and prompt information are displayed on the first page 300. The prompt information is used for reminding the user that a photo to be uploaded needs to meet a requirement. After the user completes uploading of a photo, in response to a triggering operation for an immediate create control, a submit page 400 is displayed. On this submit page, a desired effect, i.e. a virtual gift template, may be selected, and a preview corresponding to the virtual gift template is displayed. Meanwhile, through the submit page 400, the uploaded photo may be submitted for review, so that in a case of approval, a virtual gift is generated using the uploaded photo.

A presentation form of the second page may be the first page 300 in FIG. 2. This embodiment will not elaborate this here.

S102: A virtual gift template corresponding to the information to be processed is determined.

In this embodiment, a plurality of virtual gift templates may be customized in advance to meet different needs, so that the user can determine a matching virtual gift template according to an own need or a type of the information to be processed, to enhance a presentation effect of a virtual gift. Different virtual gift templates correspond to different animation effects.

The virtual gift template corresponding to the information to be processed may be determined through the following:
In one mode, in response to a selection operation triggered by the user, the virtual gift template corresponding to the selection operation is obtained. That is, after the user completes the uploading of the information to be processed, the user can select the desired virtual gift template, to generate a virtual gift using the virtual gift template selected by the user and the information to be processed.

In another mode, the virtual gift template corresponding to the information to be processed is determined according to a type of the information to be processed. That is, virtual gift templates corresponding to different types of information to be processed may be configured in advance. After the information to be processed is obtained, the matching virtual gift template is determined according to the type of the information to be processed. The type of the information to be processed may include an image or text. When the type of the information to be processed is the image, the information to be processed may correspond to a virtual template for processing the image. When the type of the information to be processed is the text, the information to be processed may correspond to a virtual template for processing the text.

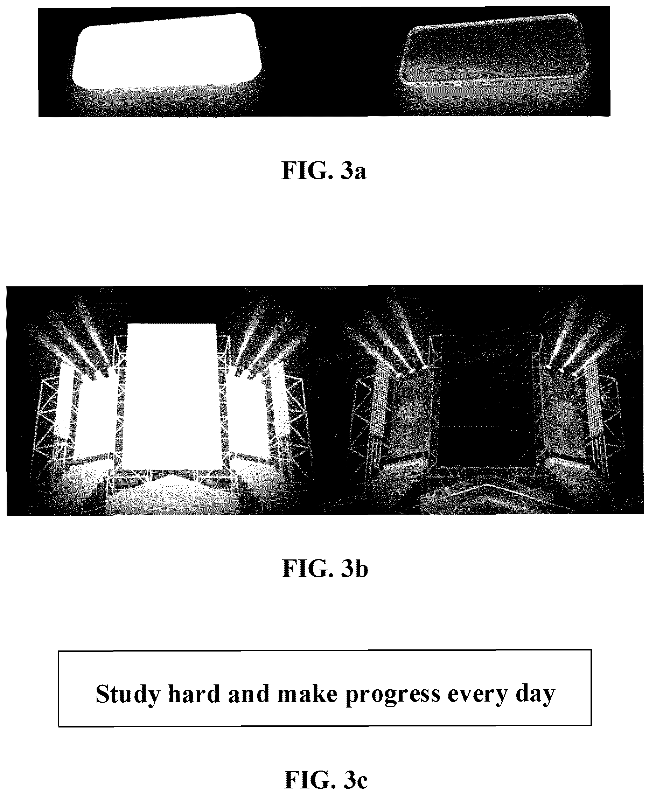

In some implementations, if the information to be processed includes a target object, the virtual gift template is a scene template; the scene template includes a scene element for presenting the target object; and the target object in the virtual gift is rendered to the scene element. The target object may be text, character, animal, and other objects. For example, FIG. 3a shows a rectangular display box serving as a scene element for carrying text, and FIG. 3b shows a display screen serving as a scene element for carrying a character. If the target object is a text object, and a display element of the text object is greater than a display length of the scene element, the text object in the virtual gift is presented in a cyclic rolling manner.

The virtual gift template may include at least one of foreground information, background information, and a transformation model. The foreground information is used for providing a foreground image for a generated virtual gift, the background information is used for providing a background image for the generated virtual gift, and the transformation model is used for adding a dynamic transformation effect to the information to be processed. That is, an input of the transformation model is the information to be processed, and information output by the transformation model is processed information output after processing the above information to be processed. The dynamic transformation effect may include dynamic effects such as the information to be processed in the virtual gift changing from large to small, changing from near to far, and the like during the displaying of the virtual gift.

The foreground information may be a foreground sequence frame; the transformation model may be a 3D model; and the background information may be a background video. The foreground sequence frame is used for providing a foreground animation for the finally generated virtual gift. The foreground sequence frame is obtained by merging a plurality of pictures.

The 3D model is used for processing the information to be processed, so that the above processed information presents the dynamic transformation effect. Processing operations of the 3D model may include static processing and dynamic processing. The static processing may be correcting a color for the information to be processed, and the dynamic processing may be adding the dynamic transformation effect to the information to be processed. The static processing may include pixelation, graying, color mapping, glow processing, exposure correction, and validation adjustment. The dynamic processing may further include adding glowing sequence frames and adding a special effect of flashing.

The pixelation means dividing the image to be processed into a number of pixels, extracting color values from the pixels as pixel values of a current pixel block, and then converting the pixel values into circular pixel points. The graying means converting a color image into a grayscale image. Specifically, a maximum RGB value in the image to be processed may be extracted and is used as a grayscale value for graying of the image to be processed. The color mapping means color mapping according to a grayscale difference. Specifically, a difference may be calculated according to a grayscale value, and a boundary line may be determined according to the difference. Colors on two sides of the boundary line are mixed to obtain a color after mapping. The color adjustment mainly means contrast adjustment, which can be adjust a graphics using a general-purpose contrast algorithm, to improve the contrast and make a glow effect more prominent.

The implementation of the glowing sequence frames may include: calculating an index of each frame according to a number of frames in each row and column of sequence frame textures, and then switching positions of the textures according to the indexes. During rendering of each frame, a timestamp is updated, and the index of a current target frame that needs to be displayed is calculated according to a time interval. Then, UV coordinates of a map are updated as a position of the target frame, thus playing the sequence frames in an animation.

The implementation of adding the special effect of flashing may include: using additional random noise images to determine positions of flashing points. Specifically, points, greater than a color value, in a noise image are determined to be the flashing points, so that randomly distributed flashing points can be obtained. Meanwhile, flashing points that have varying brightness and flicker alternatively can be obtained by combining a sine function with time parameters.

The background video is used for outputting an animation with a background special effect. For example, when the information to be processed is the text, FIG. 3a shows providing a display box carrying the text for the background video. When the information to be processed is a character image, FIG. 3b shows providing a display screen carrying the character image for the background video.

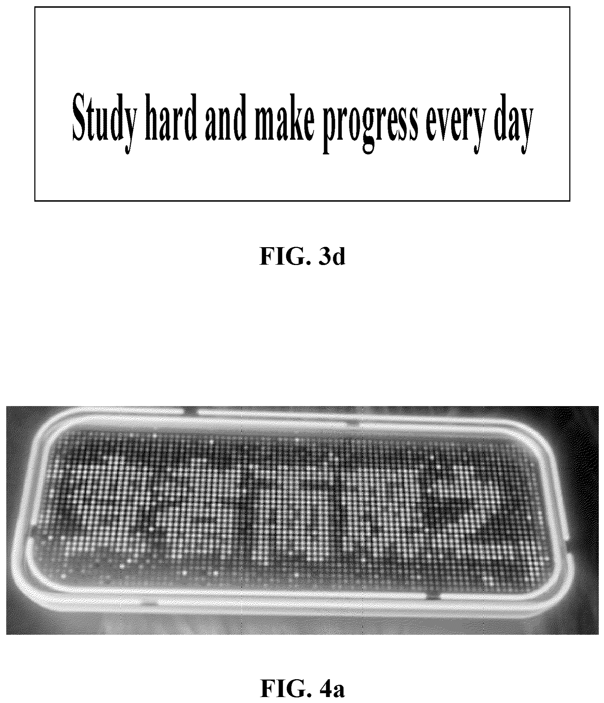

When the information to be processed is the text, composing, font adjustment, and the like may be performed on the text. When a length of the text is greater than a preset display length, the text is displayed in a rolling manner. When the length of the text is less than the preset display length, the text may be displayed in a center. In specific implementation, the text is drawn on a canvas and a width of the canvas is set according to a width of the text, as shown in FIG. 3c. When the canvas is long, if rendering is directly performed, a text may be heightened, as shown in FIG. 3d. To avoid the heightening of the text, a horizontal axis of a texture coordinate on the canvas can be scaled to ensure a width-to-height ratio of a word. Specifically, the horizontal coordinate of the texture is divided by a scaling ratio, and then the scaled texture is rendered. The scaling ratio is determined according to an actual application situation and needs to be determined according to a size of the texture. The size of the texture varies as a number of words changes.

S103: A virtual gift is generated based on the virtual gift template and the information to be processed.

After the virtual gift template and information to be processed are obtained, the virtual gift is generated based on the virtual gift template and information to be processed, thus obtaining the virtual gift required by the user.

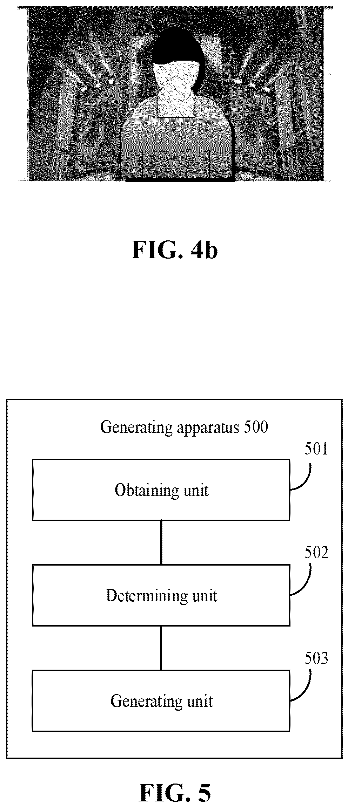

For example, when the information to be processed is text to be processed, the virtual gift generated based on the virtual gift template is a badge gift, and a presentation effect is shown in FIG. 4a. The text to be processed is presented on the badge. In specific applications, after the badge gift is sended to the live streamer, the badge may be presented dynamically in the live streaming room. When the information to be processed is a character image to be processed, the virtual gift generated based on the virtual gift template is a gift that includes a character image, and a presentation effect is shown in FIG. 4b.

In some implementations, the virtual gift is generated based on the virtual gift template and the information to be processed, which includes: Playback time of target information is obtained; and the virtual gift is generated based on the playback time of the target information. The target information is at least one of the foreground information, the background information, the information to be processed, and information output by the transformation model. That is, playback time corresponding to each component that forms the virtual gift is obtained, and the virtual gift is generated according to the playback time corresponding to each component. The playback time corresponding to each component may be configured in advance. For example, a playback duration of the background information is 2 seconds; a playback duration of the background information is 10 seconds; and a playback duration of the information to be processed or the information output by the transformation model is 8 seconds. Under normal circumstances, if the playback duration of background information is the longest, the components may be played based on a playback timeline of the background information. For example, when the background information starts to be played, the foreground information is played in the previous 2 seconds, and then the information to be processed or the information output by the transformation model is played. They are played for totally 8 seconds.

Or, the animation playback time corresponding to the virtual gift template may be obtained first, and then the playback time of the target information may be determined based on the animation playback time corresponding to the virtual gift template. That is, the playback times of different information are determined respectively based on the animation playback time corresponding to the virtual gift template, and then the virtual gift is generated based on the playback times of the information, so that the virtual gift with the animation effect can present effects brought by different information. The virtual gift generated through the virtual gift template has the animation effect, and the animation playback time means playback time of presenting the animation effect corresponding to the virtual gift. The animation playback time may be configured in advance during the creation of the virtual gift template, or may be dynamically configured according to an amount of the information to be processed, so that the generated virtual gift can better present the information to be processed. For example, when the information to be processed is the text object, the animation playback time may be determined according to a number of characters included in the text object.

When content included in the virtual gift template is different, the playback time of the target information is determined based on the animation playback time corresponding to the virtual gift template, which may specifically include:

In one mode, if the virtual gift template includes the foreground information, the target information is the foreground information and the information to be processed. Playback start time and playback end time of the foreground information and playback start time of the information to be processed are determined based on the animation playback time corresponding to the virtual gift template, wherein the playback start time of the foreground information is earlier than the playback start time of the information to be processed; and the playback end time of the foreground information is earlier than playback end time in the animation playback time. That is, when the virtual gift with the animation effect is played, the foreground information is played first, and then the information to be processed is played, so that the foreground information and the information to be processed are fused in terms of the playback time, which reflects a foreground image provided by the foreground information. Under normal circumstances, the playback end time of the foreground information is equal to the playback start time of the information to be processed, i.e., the information to be processed is played immediately after the playing of the foreground information is completed. The playback end time of the information to be processed is usually equal to the playback end time of the animation playback time corresponding to the virtual gift template.

In one mode, if the virtual gift template includes the background information, the target information includes the background information and the information to be processed. The animation playback time corresponding to the virtual gift template is set as playback time of the background information, and playback start time of the information to be processed is determined according to the animation playback time corresponding to the virtual gift template. That is, when the virtual gift template includes the background information, a playback background is added to the information to be processed during the generation of the virtual gift, which highlights the information to be processed and enhances the sense of space.

The playback time of the background information is equal to the animation playback time. That is, the playback start time of the background information is equal to the playback start time of the animation playback time, and the playback end time of the background information is equal to the playback end time in the animation playback time. When an animation of the virtual gift starts to be played, the background information starts to be played. The playback start time of the information to be processed may be equal to the playback start time in the animation playback time or later than the playback start time in the animation playback time. When the playback start time of the information to be processed is later than the playback start time in the animation playback time, the playback start time corresponding to the information to be processed may be set in advance. That is, the information to be processed and the background information may be played simultaneously or may be played in a delay. Usually, the playback end time of the information to be processed is equal to the playback end time in the animation playback time, or may be earlier than the playback end time in the animation playback time. When the playback end time of the information to be processed is earlier than the playback end time in the animation playback time, a playback duration corresponding to the information to be processed may be set in advance, and the playback end time may be determined based on the preset playback start time and playback duration.

In one mode, if the virtual gift template includes the transformation model, the target information is the information output by the transformation model. The animation playback time corresponding to the virtual gift template is set as playback time of the information output by the transformation model. That is, in a case that only the transformation model is used, the information to be processed is processed using the transformation model to obtain processed information, and playback time of the processed information is equal to the animation playback time corresponding to the virtual gift template. To be specific: Playback start time of the processed information is equal to the playback start time in the animation playback time, and playback end time of the processed information is equal to the playback end time in the animation playback time.

In one mode, if the virtual gift template includes the foreground information and the background information, the target information includes the foreground information, the background information, and the information to be processed. The animation playback time corresponding to the virtual gift template is set to be the playback time of the background information; the playback start time and the playback end time of the foreground information are determined according to the animation playback time corresponding to the virtual gift template; the playback start time of the foreground information is the same as the playback start time of the background information; and the playback start time of the information to be processed is determined according to the animation playback time corresponding to the virtual gift template. The playback start time of the foreground information is earlier than the playback start time of the information to be processed. Under normal circumstances, the playback end time of the foreground information may also be earlier than the playback start time of the information to be processed. That is, when the animation of the virtual gift is played, the foreground information and the background information are played simultaneously, but the foreground information is only played for a period of time, and the background information is played throughout the entire process. After the playback of the foreground information ends, the information to be processed starts to be played. For example, if the animation playback time corresponding to the virtual gift template is 10 seconds, the background information is played for 10 seconds, the foreground information is played for the previous 2 seconds, and the information to be processed starts to be played from the 2nd second.

If the background information is a background video, both the foreground information and an output result of the transformation model are achieved depending on a loop of a renderer. In theory, a playback order can be controlled according to a time difference of the renderer. However, the playback of the background video relies more on control of an underlying player, and rendering only occurs when a video frame is updated, which can lead to a problem that the video and the foreground information are not synchronized. Based on this, rendering of other parts is updated with a timeline of the background video.

In some implementations, if the virtual gift template has the corresponding animation playback time, each piece of target information has its own corresponding playback time. If the animation playback time does not match the playback time corresponding to the target information, the playback time corresponding to the target information can be adjusted according to the animation playback time. For example, if the animation playback time is 10 seconds and the background information playback time is 8 seconds, the playback duration of the background information is changed to 10 seconds. Or, the playback time corresponding to a piece of target information is determined to be the animation playback time. For example, if an animation playback duration is 8 seconds, and a playback duration corresponding to the background information is 10 seconds, the animation playback duration is changed to 10 seconds.

In some implementations, if the user is the viewer of the live streaming room, after the virtual gift is generated, the virtual gift can be displayed on the gift panel of the corresponding live streaming room for the user to send the live streamer with the virtual gift. If the user is the live streamer of the live streaming room, the virtual gift is displayed on the gift panels of all viewers entering the live streaming room corresponding to the live streamer.

It can be seen that in response to the triggering operation by the user in the live streaming room, the information to be processed is obtained. The information to be processed is the information used for generating the virtual gift. After the information to be processed is obtained, the virtual gift template corresponding to the information to be processed is determined. Different virtual gift templates correspond to different animation effects. The virtual gift template includes at least one of foreground information, background information, and a transformation model, the foreground information is used for providing a foreground image for a generated virtual gift, the background information is used for providing a background image for the generated virtual gift, and the transformation model is used for adding a dynamic transformation effect to the information to be processed. The virtual gift is generated based on the virtual gift template and the information to be processed. The virtual gift presents a special effect corresponding to the virtual gift template. That is, the present application supports the user to use different virtual gift templates and information to be processed to generate the desired virtual gift, to interact with the live streamer by using the virtual gift, thereby enhancing the interaction effect and the user experience.

Based on the above method embodiment, an embodiment of the present application provides a virtual gift generating apparatus and an electronic device, which are explained below in conjunction with the accompanying drawings.

Referring to FIG. 5, it shows a structural diagram of a virtual gift generating apparatus according to an embodiment of the present application. As shown in FIG. 5, the apparatus 500 may include an obtaining unit 501, a determining unit 502, and a generating unit 503.

The obtaining unit 501 is configured to: in response to a triggering operation by a user, obtain information to be processed, wherein the information to be processed is information used for generating a virtual gift;
the determining unit 502 is configured to determine a virtual gift template corresponding to the information to be processed, wherein the virtual gift template includes at least one of foreground information, background information, and a transformation model, the foreground information is used for providing a foreground image for a generated virtual gift, the background information is used for providing a background image for the generated virtual image, the transformation model is used for adding a dynamic transformation effect to the information to be processed; and
the generating unit and 503 is configured to generate a virtual gift based on the virtual gift template and the information to be processed.

In some implementations, the generating unit 503 is specifically configured to obtain playback time of target information, wherein the target information is at least one of the foreground information, the background information, the information to be processed, and information output by the transformation model; and generate the virtual gift based on the playback time of the target information.

In some implementations, the generating unit 503 is specifically configured to determine the playback time of the target information based on animation playback time corresponding to the virtual gift template.

In some implementations, if the virtual gift template includes the foreground information, the target information includes the foreground information and the information to be processed; and the generating unit 503 is specifically configured to determine playback start time and playback end time of the foreground information and playback start time of the information to be processed based on the animation playback time corresponding to the virtual gift template, wherein the playback start time of the foreground information is earlier than the playback start time of the information to be processed; and the playback end time of the foreground information is earlier than playback end time in the animation playback time.

In some implementations, if the virtual gift template includes the background information, the target information includes the background information and the information to be processed; and the generating unit 503 is specifically configured to: set the animation playback time corresponding to the virtual gift template as playback time of the background information, and determine playback start time of the information to be processed according to the animation playback time corresponding to the virtual gift template.

In some implementations, if the virtual gift template includes the transformation model, the target information is the information output by the transformation model; and the generating unit 503 is specifically configured to set the animation playback time corresponding to the virtual gift template as playback time of the information output by the transformation model.

In some implementations, if the virtual gift template includes the foreground information and the background information, the target information includes the foreground information, the background information, and the information to be processed; and the generating unit 503 is specifically configured to: set the information output by the transformation model as playback time of the background information; determine playback start time and playback end time of the foreground information according to the animation playback time corresponding to the virtual gift template, wherein the playback start time of the foreground information is the same as playback start time of the background information; and determine the animation playback time corresponding to the virtual gift template to be playback start time of the information to be processed, wherein the playback start time of the foreground information is earlier than the playback start time of the information to be processed.

In some implementations, the obtaining unit 501 is specifically configured to: in response to a triggering operation by the user on a first control on a gift panel of a live streaming room, display a first page; and in response to an upload operation triggered by the user on the first page, obtain uploaded information to be processed; or, in response to a triggering operation by the user on a second control on a personal homepage of a live streaming client, display a second page; and in response to an upload operation triggered by the user on the second page, obtain uploaded information to be processed.

In some implementations, the determining unit 502 is specifically configured to: in response to a selection operation triggered by the user, obtain the virtual gift template corresponding to the selection operation; or, determine the virtual gift template corresponding to the information to be processed according to a type of the information to be processed.

In some implementations, if the user is a viewer, a gift panel of a live streaming room corresponding to the user includes the virtual gift; and if the user is a live streamer, gift panels of all viewers entering a live streaming room corresponding to the live streamer include the virtual gift.

In some implementations, if the information to be processed includes a target object, the virtual gift template is a scene template; the scene template includes a scene element for presenting the target object; and the target object in the virtual gift is rendered to the scene element.

In some implementations, if the target object is a text object, and a display element of the text object is greater than a display length of the scene element, the text object in the virtual gift is presented in a cyclic rolling manner.

It should be noted that the specific implementations of the units in this embodiment can be found in the relevant descriptions in the above method embodiment. In this embodiment of the present application, division of the units is an example and is merely logical function division, and there may be other division in actual implementation. The functional units in this embodiment of the present application may be integrated into one processing unit, or the units may exist alone physically, or two or more units are integrated into one unit. For example, in the above embodiment, the processing unit and the sending unit may be the same unit or different units. The integrated units mentioned above can be implemented in both a hardware form and a software functional unit form.

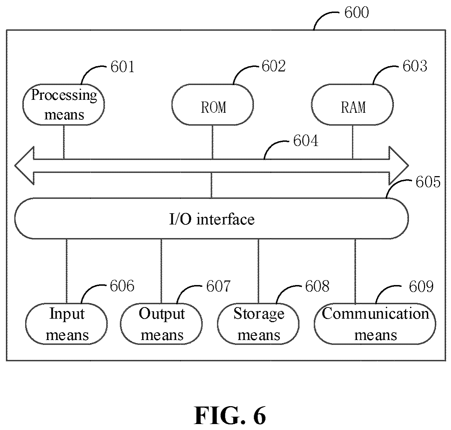

Referring to FIG. 6, it illustrates a schematic structural diagram of an electronic device 600 suitable for implementing the embodiments of the present application. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 6 is only an example and should not impose any limitations on the functionality and scope of use of the embodiments of the present disclosure.

As shown in FIG. 6, the electronic device 600 may include a processing means (such as a central processing unit and graphics processor) 601 that can perform various appropriate actions and processing according to programs stored in a Read-Only Memory (ROM) 602 or loaded from a storage means 608 to a Random Access Memory (RAM) 603. Various programs and data required for operations of the electronic device 600 may alternatively be stored in the RAM 603. The processing means 601, the ROM 602, and the RAM 603 are connected to each other through a bus 604. An Input/Output (I/O) interface 605 is also connected to the bus 604.

Usually, following apparatuses can be connected to the I/ O interface 605: an input means 606 including a touch screen, a touchpad, a keyboard, a mouse, a camera, a microphone, an accelerometer, a gyroscope, and the like; an output means 607 including a Liquid Crystal Display (LCD), a speaker, a vibrator, and the like; a storage means 608 including a magnetic tape, a hard disk drive, and the like; and a communication means 609. The communication means 609 can allow the electronic device 600 to wirelessly or wiredly communicate with other devices to exchange data. Although FIG. 6 shows the electronic device 600 with various apparatuses, it should be understood that the electronic device 600 is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes used for performing the methods shown in the flowcharts. In such an embodiment, the computer program may be downloaded and installed from a network through the communication means 609, or installed from the storage means 608, or installed from the ROM 602. When the computer program is executed by the processing means 601, the above functions defined in the methods of the embodiments of the present application are executed.

The electronic device provided in this embodiment of the present application and the method provided in the above embodiment belong to the same concept. Technical details not fully described in this embodiment can be found in the above embodiment, and this embodiment has the same effects as the above embodiment.

An embodiment of the present disclosure provides a computer storage medium, having a computer program stored therein. The program, when run by a processor, implements the method provided in the above embodiments.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a Hyper Text Transfer Protocol (HTTP), and can intercommunicate and be interconnected with digital data in any form or medium (for example, a communication network). Examples of the communication network include a Local Area Network (LAN), a Wide Area Network (WAN), an internet (e.g. an Internet), a point-to-point network (e.g. an ad hoc point-to-point network, and any currently known or future developed network.

The computer-readable medium may be included in the electronic device or exist alone and is not assembled into the electronic device.

The above computer-readable medium carries one or more programs. When run by the electronic device, the one or more programs cause the electronic device to implement the above method.

Computer program codes for performing the operations of the present disclosure may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The names of the units/modules do not constitute a limitation on the units in a situation.

The functions described herein above may be performed, at least in part, by one or a plurality of hardware logic components. For example, nonrestrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

It should be noted that the various embodiments in this specification are described in a progressive manner, and each embodiment focuses on differences from other embodiments. The same and similar parts between all the embodiments can be referred to each other. Since the system or apparatus disclosed in the embodiments correspond to the method disclosed in the embodiments, the apparatus is described simply, and related parts are found in some of the explanations of the method.

It should be understood that in the present application, "at least one" means one or more, and "plurality" means two or more. The term "and/or" is used for describing an association relationship of related objects, indicating that there are three types of relationships. For example, "A and/or B" can represent: only A exists, only B exists, and A and B exist simultaneously, wherein A and B can be singular or plural. The character "/" usually indicates an "or" relation between associated objects. The term "at least one of the following items" or its similar expression means any combination of these items, including any combination of a single item or a plurality of items. For example, at least one of a, b, or c can represent: a, b, c, "a and b", "a and c", "b and c", or "a and b and c", wherein a, b, and c can be singular or plural.

It should be further noted that in this document, relationship terms such as first and second are used solely to distinguish one entity or operation from another entity or operation without necessarily requiring or implying any actual such relationship or order between such entities or operations. Furthermore, the terms "include", "including", or any other variation thereof, are intended to encompass a non-exclusive inclusion, such that a process, method, article, or device that includes a list of elements does not include only those elements but may include other elements not explicitly listed or inherent to such process, method, article, or device. Without further limitation, an element defined by the phrase "including a/an..." does not exclude the presence of another identical elements in the process, method, article or device that includes the element.

The steps of the method or algorithm described in conjunction with the embodiments disclosed herein can be implemented directly using hardware, software modules executed by the processor, or a combination thereof. The software modules can be placed in a RAM, an internal memory, a ROM, an EPROM, EEPROM, a register, a hard disk drive, a removable disk, a CD-ROM, or a storage medium in any other form known in the technical field.

The above explanations of the disclosed embodiments enable those skilled in the art to implement or use the present application. The various modifications to these embodiments will be apparent to those skilled in the art, and the general principles defined herein can be implemented in other embodiments without departing from the spirit or scope of the present application. Thus, the present invention is not limited to these embodiments shown herein, but accords with the broadest scope consistent with the principles and novel features disclosed herein.

## Claims

1. A virtual gift generating method, comprising:
in response to a triggering operation by a user, obtaining information to be processed;
determining a virtual gift template corresponding to the information to be processed, the virtual gift template comprising at least one of foreground information, background information, and a transformation model, the foreground information being used for providing a foreground image for a generated virtual gift, the background information being used for providing a background image for the generated virtual gift, the transformation model being used for adding a dynamic transformation effect to the information to be processed; and
generating a virtual gift based on the virtual gift template and the information to be processed.

2. The method of claim 1, wherein generating the virtual gift based on the virtual gift template and the information to be processed comprises:
obtaining playback time of target information, the target information being at least one of the foreground information, the background information, the information to be processed, and information output by the transformation model; and
generating the virtual gift based on the playback time of the target information.

3. The method of claim 2, wherein obtaining the playback time of the target information comprises:
determining the playback time of the target information based on animation playback time corresponding to the virtual gift template.

4. The method of claim 3, wherein in response to the virtual gift template comprising the foreground information, the target information comprises the foreground information and the information to be processed; and determining the playback time of the target information based on the animation playback time corresponding to the virtual gift template comprises:
determining playback start time and playback end time of the foreground information and playback start time of the information to be processed based on the animation playback time corresponding to the virtual gift template, the playback start time of the foreground information being earlier than the playback start time of the information to be processed, and the playback end time of the foreground information being earlier than playback end time in the animation playback time.

5. The method of claim 3, wherein in response to the virtual gift template comprising the background information, the target information comprises the background information and the information to be processed; and determining the playback time of the target information based on the animation playback time corresponding to the virtual gift template comprises:
setting the animation playback time corresponding to the virtual gift template as playback time of the background information, and determining playback start time of the information to be processed based on the animation playback time corresponding to the virtual gift template.

6. The method of claim 3, wherein in response to the virtual gift template comprising the transformation model, the target information is the information output by the transformation model; and determining the playback time of the target information based on the animation playback time corresponding to the virtual gift template comprises:
setting the animation playback time corresponding to the virtual gift template as playback time of the information output by the transformation model.

7. The method of claim 3, wherein in response to the virtual gift template comprising the foreground information and the background information, the target information comprises the foreground information, the background information, and the information to be processed; and determining the playback time of the target information based on the animation playback time corresponding to the virtual gift template comprises:
setting the information output by the transformation model as playback time of the background information;
determining playback start time and playback end time of the foreground information based on the animation playback time corresponding to the virtual gift template, the playback start time of the foreground information being the same as playback start time of the background information; and
determining the animation playback time corresponding to the virtual gift template to be playback start time of the information to be processed, the playback start time of the foreground information being earlier than the playback start time of the information to be processed.

8. The method of claim 1, wherein in response to the triggering operation by the user, obtaining the information to be processed comprises:
in response to a triggering operation by the user on a first control on a gift panel of a live streaming room, displaying a first page; and in response to an upload operation triggered by the user on the first page, obtaining uploaded information to be processed;
or,
in response to a triggering operation by the user on a second control on a personal homepage of a live streaming client, displaying a second page; and in response to an upload operation triggered by the user on the second page, obtaining uploaded information to be processed.

9. The method of claim 1, wherein determining the virtual gift template corresponding to the information to be processed comprises:
in response to a selection operation triggered by the user, obtaining the virtual gift template corresponding to the selection operation;
or,
determining the virtual gift template corresponding to the information to be processed based on a type of the information to be processed.

10. The method of claim 1, wherein in response to the user being a viewer, a gift panel of a live streaming room corresponding to the user comprises the virtual gift; and in response to the user being a live streamer, gift panels of all viewers entering a live streaming room corresponding to the live streamer comprise the virtual gift.

11. The method of claim 1, wherein
in response to the information to be processed comprising a target object, the virtual gift template is a scene template; and the scene template comprises a scene element for presenting the target object; and the target object in the virtual gift is rendered to the scene element.

12. The method of claim 11, wherein in response to the target object being a text object, and a display element of the text object being greater than a display length of the scene element, the text object in the virtual gift is presented in a cyclic rolling manner.

13. A virtual gift generating apparatus, comprising:
an obtaining unit, configured to: in response to a triggering operation by a user, obtain information to be processed, the information to be processed being information used for generating a virtual gift;
a determining unit, configured to determine a virtual gift template corresponding to the information to be processed, the virtual gift template comprising at least one of foreground information, background information, and a transformation model, the foreground information being used for providing a foreground image for a generated virtual gift, the background information being used for providing a background image for the generated virtual image, the transformation model being used for adding a dynamic transformation effect to the information to be processed; and
a generating unit, configured to generate a virtual gift based on the virtual gift template and the information to be processed.

14. An electronic device, comprising: a processor and a memory,
the memory being configured to store instructions or computer programs; and
the processor being configured to execute the instructions or the computer programs in the memory to cause the electronic device to perform the method of any of claims 1 to 12.

15. A computer-readable storage medium, having instructions stored therein, wherein the instructions, when executed on a device, cause the device to perform the method of any of claims 1 to 12.
